Europäisches Patentamt

European Patent Office

Office européen des brevets

(19)

(11) Numéro de publication: **0 294 284**
**B1**

(12) **FASCICULE DE BREVET EUROPEEN**

(45) Date de publication du fascicule du brevet: **23.01.91**

(21) Numéro de dépôt: **88401317.8**

(22) Date de dépôt: **31.05.88**

(51) Int. Cl.⁵: **G 01 V 1/40,** G 01 V 1/22, E 21 B 47/12

(54) Système pour l'acquisition et l'enregistrement de signaux fournis par un ensemble de capteurs disposé dans des sondes de puits.

(30) Priorité: **04.06.87 FR 8707867**

(43) Date de publication de la demande:
**07.12.88 Bulletin 88/49**

(45) Mention de la délivrance du brevet:
**23.01.91 Bulletin 91/04**

(84) Etats contractants désignés:
**DE GB IT NL**

(56) Documents cités:
**EP-A-0 137 724**
**EP-A-0 198 966**
**GB-A-2 067 056**
**US-A-4 041 443**
**US-A-4 122 311**
**US-A-4 285 052**
**US-A-4 509 170**

(73) Titulaire: **INSTITUT FRANCAIS DU PETROLE**
**4, Avenue de Bois-Préau**
**F-92502 Rueil-Malmaison (FR)**

(72) Inventeur: **Cretin, Jacques**
**9, avenue de Villars Parly 2**
**F-78150 Le Chesnay (FR)**
Inventeur: **Therond, Jean-François**
**1, rue Théophile Gauthier**
**F-92200 Neuilly S/Seine (FR)**

Courier Press, Leamington Spa, England.

**Description**

La présente invention concerne un système pour l'acquisition et l'enregistrement de signaux fournis par un ensemble de capteurs disposé dans une ou plusieurs sondes descendues dans un puits.

L'acquisition de données de mesure dans un forage est réalisée en général en descendant dans celui-ci une ou plusieurs sondes suspendues à un câble multi-fonctions. La sonde comporte un corps allongé et un ou plusieurs bras mobiles. Des vérins hydrauliques permettent de déplacer chaque bras d'une position de repos contre le corps de la sonde à une position d'ouverture où ils viennent s'ancrer contre la paroi du forage et ainsi immobiliser la sonde. Des circuits hydrauliques relient les vérins à des moyens pour délivrer du fluide sous-pression comportant généralement un moteur électrique et des électro-vannes. Le câble multi-functions comporte le plus souvent une pluralité de lignes conductrices permettant la transmission de courants électriques pour l'alimentation du moteur et de signaux de toute nature. Il s'agit par exemple de signaux de commande transmis à la sonde depuis un laboratoire de surface et de signaux de réponse envoyés depuis la sonde. Les signaux de réponse sont constitués soit de signaux de contrôle ou de test soit des données mesurées par les capteurs de la sonde.

Une telle sonde est décrite par exemple dans le brevet français n° 2.501.380 ou le brevet USP n° 4.428.422.

On peut utiliser aussi par exemple une sonde pourvue de bras d'ancrage actionnés par des ressorts qui sont maintenus sous tension par des verrous durant la descente. Des moyens hydrauliques comportant des électro-vannes sont actionnées par des signaux de commande réçus par l'intermédiaire du câble multi-fonctions. Une telle sonde est décrite par exemple dans le brevet français n° 2.548.727 ou le brevet USP 4.616.703 correspondant.

Les différents capteurs descendus dans le puits pour effectuer des mesures de différente nature peuvent être inclus dans une sonde unique ou bien dans un ensemble de sondes comportant une sonde principale sous laquelle sont suspendus à des profondeurs différentes une pluralité de sondes satellites. Un tel ensemble de sondes est décrit par exemple dans le brevet français 2.564.599.

Des opérations de prospection sismique sont réalisées par exemple en disposant dans des puis une pluralité de capteurs adaptés à détecter des ondes renvoyées par les discontinuités du sous-sol, provenant d'une source sismique disposée en surface ou à son voisinage ou bien dans un autre puits. On exploite les signaux reçus de manière à obtenir des coupes sismiques du sous-sol. Les capteurs sismiques sont généralement directifs et orientés suivant une ou plusieurs directions orthogonales les unes par rapport aux autres. Ils sont disposés dans un ensemble de plusieurs sondes de manière à capter les signaux sismiques reçus à des niveaux de profondeur différents et sont reliés à un laboratoire de surface soit directement par une ligne particulière incluse dans le câble multi-fonctions soit par l'intermédiaire d'un appareil d'acquisition sismique. Dans ce cas, les différents signaux sont collectés, échantillonnés, numérisés et transmis par une ou plusieurs lignes du câble multi-fonctions sous une forme codée. Après décodage, ils sont enregistrés et traités par un laboratoire.

Le nombre de capteurs différents d'un dispositif de réception sismique peut varier notablement selon la configuration de l'ensemble de réception utilisé.

Dans certains cas, on dispose d'une sonde de puits unique pourvue d'un compartiment pour un ou deux capteurs tri-dimensionnels comportant par exemple trois éléments sensibles directionnels dont les axes sont orientés suivant trois directions orthogonales les unes aux autres. Dans d'autres cas, on descend dans le forage un ensemble de plusieurs sondes suspendues les unes au-dessous des autres et contenant chacune au moins un capteur. Un appareil d'acquisition est disposé dans la sonde principale. Il est relié aux capteurs logés dans les différentes sondes. Il peut s'agir de capteurs directionnels ou bien de capteurs tri-dimensionnels. Le nombre de canaux sismiques à acquérir est donc très variable et il importe que l'appareil d'acquisition employé puisse être adapté facilement à des configurations de capteurs très différentes.

Le système selon l'invention permet l'acquisition et l'enregistrement de signaux fournis par un ensemble de capteurs disposés dans une ou plusieurs sondes qui sont descendues dans un puits à l'extrémité d'un câble multi-fonctions pourvu de lignes de transmission de signaux, et il peut être facilement adapté à des ensembles étendus de capteurs ou à d'autres ensembles plus restreints.

Il comporte un ensemble d'acquisition disposé dans une sonde et pourvu de moyens d'amplification de signaux, des moyens de conversion analogiques-numériques, des moyens d'adaptation de signaux avant leur application à au moins une ligne du câble multi-fonctions et de moyens de synchronisation, et un ensemble de commande et d'enregistrement disposé en surface et connecté aux lignes de transmission de signaux. Il est caractérisé en ce qu'il comporte un ensemble de multiplexage de signaux constitué d'au moins deux unités de multiplexage en parallèle possédant chacune un même nombre de voies d'entrée, les sorties des deux unités de multiplexage étant interconnectées à l'entrée de l'ensemble d'acquisition et les voies d'entrées de l'une au moins de ces deux unités recevant des signaux provenant desdits capteurs, des moyens de commande pour valider (enabling) une seule unité de multiplexage à la fois, de manière à sélectionner les voies d'entrée de celle-ci, et des moyens pour commander la commutation des voies d'entrée de l'ensemble de multiplexage à une fréquence indépendante du nombre d'unités de multiplexage utilisées, de manière à faire varier la fréquence de lecture de chacune des voies d'entrée connectée à un capteur, en fonction du nombre d'unités de multiplexage utilisées.

Les moyens d'adaptation des signaux sont agencés par exemple pour grouper les données numérisées à transmettre, par blocs de mots numériques précédés d'un mot de synchronisation, le nombre de mots de chaque bloc dépendant du nombre d'unités de multiplexage et du nombre des voies d'entrée de chacune d'elles, l'affectation de chaque emplacement dans lesdits blocs dépendant du nombre de voies d'entrée effectivement connectées chacune à un desdits capteurs.

On utilise par exemple un ensemble de multi-plexage comportant deux multiplexeurs con-nectés aux moyens de synchronisation par des lignes d'adressage et une ligne de validation, celle-ci étant connectée directement à l'entrée de validation du premier multiplexeur et, par l'intermédiaire d'un élément d'inversion logique à celle du second multiplexeur.

L'ensemble de multiplexage peut comporter un multiplexeur auxiliaire connecté à une voie d'entrée de l'une des unités de multiplexage, la voie d'entrée correspondante des autres unités de multiplexage n'étant pas connectée.

Les moyens d'adaptation des signaux sont adaptés alors à grouper les données numérisées à transmettre, par blocs de mots dont le nombre est égal au nombre total de voies d'entrée de l'ensemble de multiplexage.

Le système selon l'invention peut donc être facilement adapté selon les besoins à la transmission des données fournies par un certain nombre de capteurs avec une certaine fréquence d'échantillonnage ou si le nombre de capteurs est plus petit, avec une fréquence d'échantillonnage plus élevée.

D'autres caractéristiques et avantages du système selon l'invention apparaîtront à la lecture de la description d'un mode de réalisation particu-lier donné à titre d'exemple non limitatif, en se référant aux dessins annexés où:

la figure 1 montre un train de sondes ancré dans un puits et relié à une installation en surface;

la figure 2 représente plus en détail le corps d'une sonde principale;

la figure 3 montre un schéma synoptique d'un dispositif d'acquisition de signaux logé dans la sonde principale;

la figure 4 montre plus en détail l'ensemble de multiplexage des différents signaux à transmettre à l'installation de surface, utilisé dans le dispositif d'acquisition;

la figure 5 montre un chronogramme d'un signal de validation de l'ensemble de multiplexage;

la figure 6 montre la constitution de chaque "mot" numérique transmis;

la figure 7 montre la constitution d'un bloc de mots transmis;

la figure 8 montre un chronogramme de transmission depuis un instant initial d'initialisation;

la figure 9 représente un synoptique général d'un ensemble de commande et d'enregistrement disposé en surface;

la figure 10 est un schéma synoptique d'un dispositif permettant de dissocier les blocs de mots reçus et de mémoriser séparément les mots constitutifs; et

la figure 11 montre sous forme de tableau l'organisation d'une mémoire-tampon dans le dispositif de dissociation des blocs.

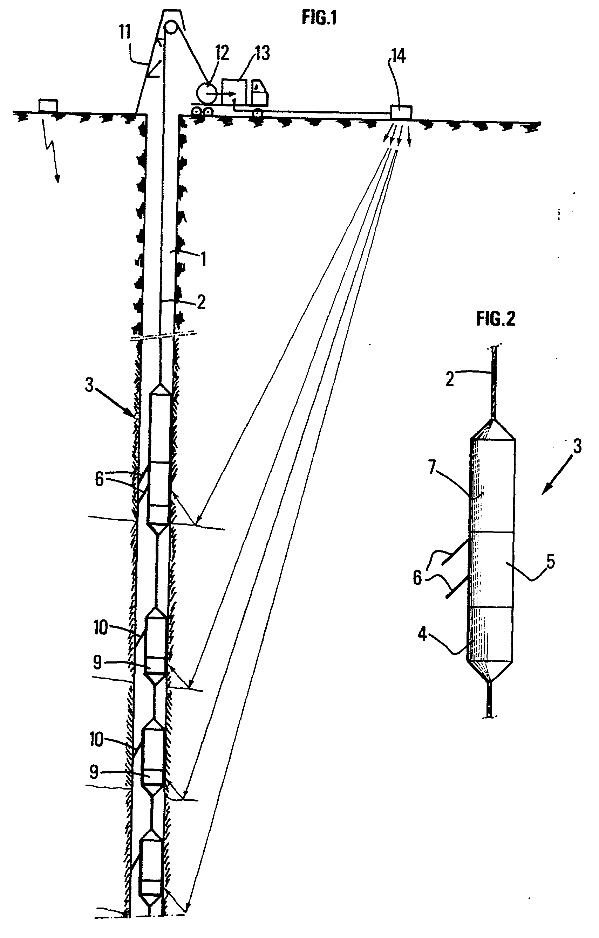

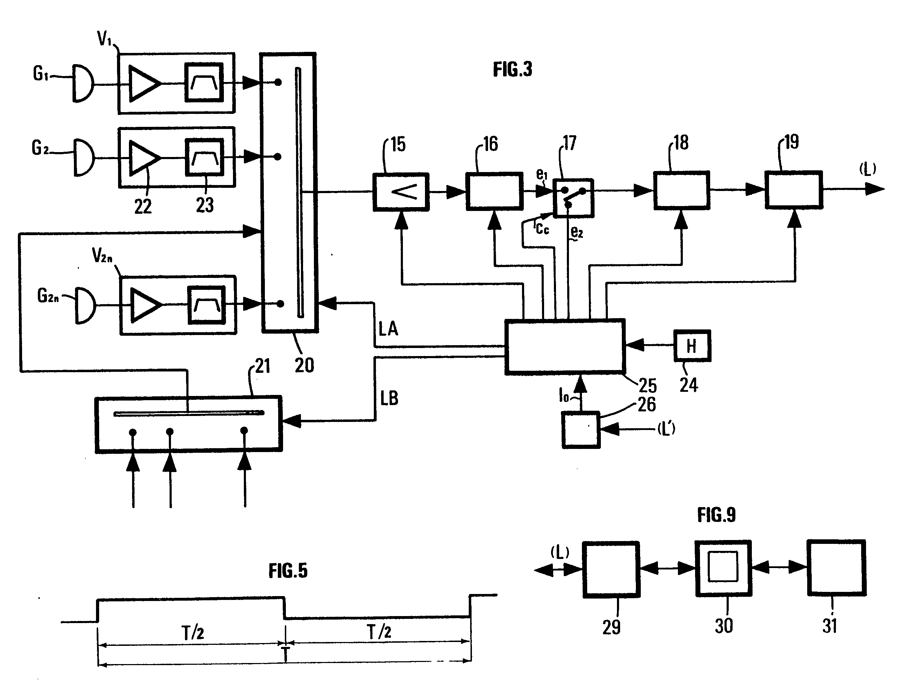

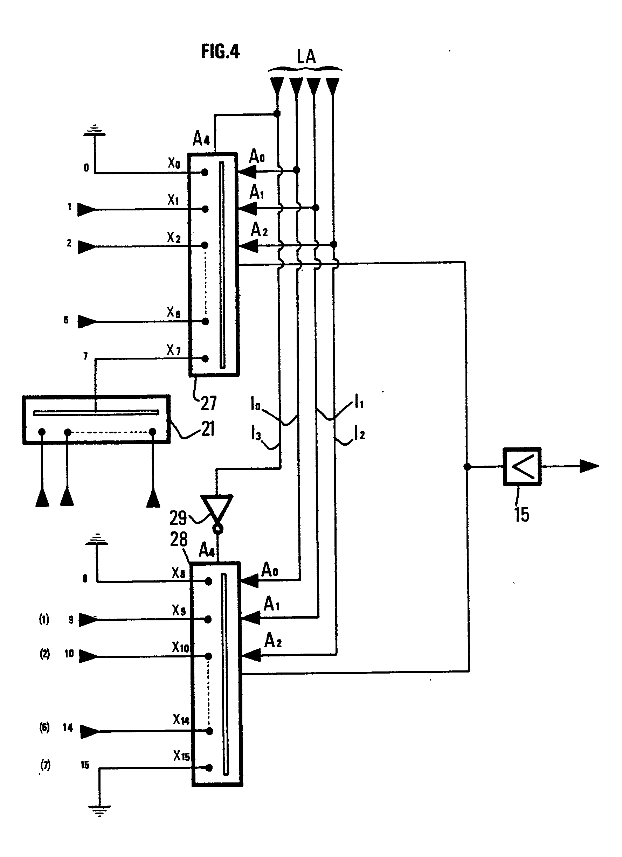

La prospection sismique du sous-sol peut être effectuée en descendant dans un forage 1 à l'extrémité d'un câble électro-porteur multi-fonctions 2, un dispositif de réception comportant une sonde unique ou un ensemble de sondes. En tête, est disposée une sonde principale 3 du type décrit dans le brevet français précité n° 2.501.380 qui comporte (fig. 2) un corps à plusieurs compartiments. Dans un compartiment inférieur sont logés un ou plusieurs capteurs sismiques. Il peut s'agit d'un géophone directionnel orienté pour capter des ondes longitudinales ou transversales ou d'un géophone triaxial adapté à capter les composantes des ondes sismiques suivant trois directions orthogonales. Dans un compartiment médian (5) est disposé un ensemble hydraulique alimentant des vérins de commande de deux bras mobiles 6 déplaçables entre une position de repli contre le corps et une position ouverte où il viennent s'ancrer dans la paroi du forage 1 et plaquer le corps de la sonde 3 contre la paroi diamétralement opposée. Dans un compartiment supérieur 7, est disposé un appareil d'acquisition de données qui sera décrit en relation avec les figures 3, 4.

Sous la sonde principale, sont suspendues selon les besoins une ou plusieurs sondes satellites 8 comportant à leur partie inférieure, un compartiment 9 pour un et plusieurs capteurs sismiques. Dans la partie supérieure est disposé un mécanisme de commande (non représenté) permettant le déclenchement d'un bras mobile 10 assurant l'ancrage de la sonde satellite contre la paroi du puits. Ce mécanisme comporte par exemple un ressort et un verrou que l'on peut télécommander. Un telle sonde satellite est décrite par exemple dans les brevets français précités n° 2.548.727 ou 2.564.599.

Le câble multi-functions relie la sonde ou le train de sondes à une installation de surface comportant une structure de support 11 pourvue d'un treuil de manoeuvre 12.

Le câble multi-fonctions 2 est d'un type courant et comporte sept lignes conductrices ($L_1$ ... $L_7$) et une gain métallique extérieure. Par le câble, on transmet du courant électrique pour faire fonction-ner un moteur assurant la mise en pression d'un liquide hydraulique nécessaire à la manoeuvre des vérins et des courants intermittents pour l'ouverture ou la fermeture d'électro-vannes de commande. D'autres lignes de câble 2 sont utilisées pour transmettre des signaux de commande et des données comme on le verra ci-après.

Le câble 2 est connecté à un treuil de manoeuvre porté par un véhicule 13 contenant un système central de commande et d'enregistrement. Une source sismique 14 est disposée en surface et, sur commande du système central, émet des ondes sismiques qui sont transmises dans le sol. Les divers signaux reçus par les différents capteurs descendus dans le puits sont collectés par l'appareil d'acquisition de données disposé dans la sonde principale 3 et transmis au système central.

L'appareil d'acquisition de données schématisé à la figure 3 comporte une chain d'acquisition comportant un amplificateur à gain variable 15 du type décrit par exemple dans les demandes de brevet français publiées n° 2.593.004 ou 2.592.537. Cet amplificateur délivre des échantillons de signaux amplifiés avec un gain optimal, à un convertisseur analogique-numérique 16. Les échantillons numérisés sont appliqués à une première entrée $e_1$, d'un commutateur électronique 17. La sortie de celui-ci est connectée à l'entrée d'un circuit spécialisé 18 adapté à coder les "mots" numériques issus du convertisseur 16 suivant un code bipolaire tel que le code HDB-3 bien connu des spécialistes. Les signaux codés sont appliqués à un élément d'émission 19 dont la sortie est connectée à une ligne L du câble multi-fonctions 2.

Le dispositif comporte aussi un ensemble de multiplexage adaptés à appliquer séquentiellement à l'entrée de la chaine d'acquisition, 2n signaux (n est un nombre entier) délivrés par des voies sismiques $V_1$, $V_2$ ... $V_{2n}$ ainsi que des signaux complémentaires. Cet ensemble de multiplexage comporte par exemple un mulpiplexeur principal 20 pourvu d'entrées pour les 2n voies sismiques $V_1$ à $V_{2n}$ et au moins une entrée connectée à la sortie d'un multiplexeur auxiliaire 21. Des signaux à variation relativement lente tels que, par exemple, des signaux indicatifs de la température régnant dans le corps de la sonde principale 3 ou de l'ouverture des différents bras d'ancrage 6, 10 etc., sont appliqués aux différentes entrées du multiplexeur auxiliaire 21.

Chacune des 2n voies sismiques $V_1$, $V_2$ ... $V_{2n}$ comporte un préamplificateur à gain fixe 22 connecté à un capteur sismique $G_1$, $G_2$ ... $G_{2n}$. Les signaux amplifiés issus des préamplificateurs 22 traversent respectivement des ensembles de filtrage passe-bande 23 avant d'être appliqués aux entrée du multiplexeur principal 20.

Un signal d'horloge H engendré par un oscillateur 24 est appliqué à un ensemble logique de synchronisation 25 qui produit des séquences de signaux comportant:

des signaux de commande du multiplexeur principal 20 et du multiplexeur auxiliaire 21, appliqués respectivement par des ensembles de lignes LA, LB;

un signal d'initialisation appliqué à une seconde entrée $e_2$ du commutateur 17;

un signal de commande du commutateur 17 appliqué sur une entrée Cc de celui-ci et permettant la connexion à l'entrée du circuit de codage 18, soit de son entrée $e_1$, soit de son entrée $e_2$; et

des signaux de synchronisation des différents éléments 15, 16, 18 et 19 de la chaine d'acquisition sismique.

Un ensemble d'interface 26 reçoit par une ligne L' du câble multi-fonctions 2, des signaux pour synchroniser les cycles d'acquisition de données.

A titre d'exemple le nombre n est choisi égal à 6. Cela permet l'acquisition de 12 signaux sismiques distincts. A ce nombre peut correspondre par exemple un dispositif de réception comportant quatre sondes pourvus chacun d'un géophone triaxial ou éventuellement douze sondes contenant chacune un capteur mono-directionnel, en passant par des configurations intermédiaires où chaque sonde comporte deux capteurs directionnels.

La période d'échantillonnage de chacun des signaux dépend du nombre de voies du multiplexeur et du débit maximal de données qui peut être acheminé sur les lignes du câble de transmission 2. Si le nombre de capteurs est plus limité, ce qui se produit pour certaines applications sismiques par exemple où l'on n'utilise que la moitié des voies, et si la structure du multiplexeur est figée, les possibilités de transmission seront sous-employées, une partie de la période de multiplexage étant consacrée à la lecture de voies non connectées.

Le dispositif selon l'invention comporte un ensemble de multiplexage qui peut être très facilement limité à l'interrogation d'un nombre plus restreint et qui offre en contre-partie une période d'échantillonnage plus courte, ceci en utilisant une structure de commande simplifiée.

L'ensemble 20 comporte deux unités de multiplexage 27, 28 (fig. 4) offrant chacun (n+2) voies d'entrée, n représentant la moitié du nombre total de voies sismiques requis. Sur le schéma de la figure 4, on a choisi n égal à 6. On désigne $X_0$, $X_1$ ... $X_7$ les entrées de l'unité 27 et par $X_8$, $X_9$ ... $X_{15}$, celles de l'unité 27. L'entrée $X_0$ est connectée à la masse. La commutation de l'unité 22 sur cette voie permet de faire éventuellement des corrections automatiques de zéro durant l'étape de numérisation des échantillons. Les entrées $X_1$ à $X_6$ sont connectées aux voies sismiques $V_1$ à $V_6$ (fig. 3). L'entrée $X_7$ est connectée par exemple à la sortie du multiplexeur auxiliaire 21. Les entrées $X_8$ et $X_{15}$ de l'unite 28 sont connectées à la masse ou éventuellement restent non connectées. Les entrées $X_9$, $X_{10}$ ... $X_{14}$ sont connectées aux voies sismiques $V_7$ à $V_{12}$. Les sorties respectives des deux unités de multiplexage 27, 28 sont interconnectées à l'entrée de l'amplificateur 15.

Chaque unité 27, 28 comporte trois entrées $A_0$, $A_1$, $A_2$, pour l'application de signaux de sélection de voies et une entrée $A_4$ de validation. L'ensemble de lignes $L_A$ connectant l'ensemble logique de synchronisation 25 (fig. 4) au multiplexeur principal 20 comporte trois lignes d'adressage $l_0$, $l_1$, $l_2$ connectées respectivement aux entrées $A_0$, $A_1$, $A_2$ des deux unités 27, 28 et une ligne $l_3$ connectée à l'entrée $A_4$ de l'unité 27. L'entrée correspondante de l'unité 28 est connectée à cette même ligne $l_3$ par l'intermédiaire d'un circuit d'inversion logique (ou inverseur) 29.

Le dispositif d'acquisition fonctionne de la manière suivante:

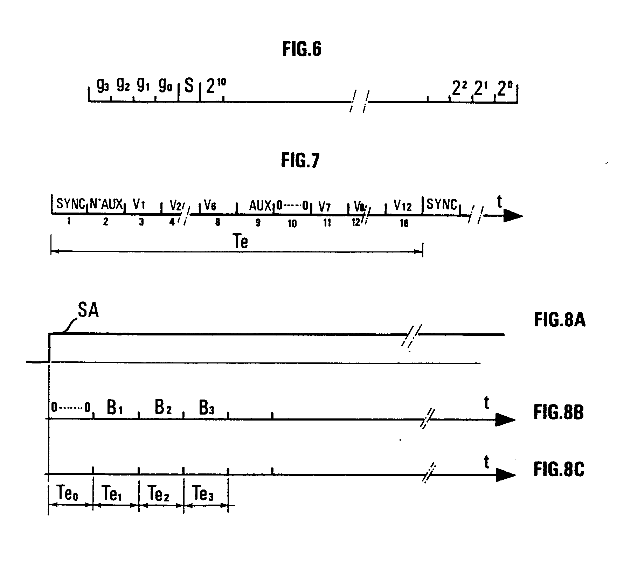

Si l'on descend dans un forage un ensemble de réception comportant douze capteurs, configuration pour laquelle la période de multiplexage convenable est $T_e$, on commande l'ensemble de synchronisation 25, de manière qu'il applique durant chaque cycle d'acquisition sur la ligne $I_3$ un signal alternativement haut et bas (fig. 5) c'est-à-dire de valeurs logiques respectives 1 et 0. Du fait de l'inverseur 29, les signaux de commande appliqués aux deux unités de multiplexage 27, 28 sont complémentaires. Lorsque l'unité 27 est validée l'autre (28) est inhibée et réciproquement. Durant la première demi-période $T_e/2$, les signaux de commande appliqués sur les lignes d'adressage $I_0$, $I_1$, $I_2$ connectent successivement les entrées $X_0$ à $X_7$. Durant l'autre demi-période $T_e/2$, ce sont les entrées $X_8$ à $X_{15}$ de l'autre unité 28 qui sont successivement connectées. L'application du signal alternatif sur la ligne $I_3$ permet de balayer l'ensemble des entrées du multiplexeur principal 20.

Si, pour les opérations de prospection sismique à effectuer, on n'utilise au plus que six capteurs connectés aux entrées $X_1$ à $X_6$ de l'unité de multiplexage 27, on commande l'ensemble de synchronisation 25 pour qu'il applique en permanence sur la ligne $I_3$ un signal de niveau logique haut, de manière à inhiber l'unité 28 en permanence. La durée d'exploration de 6 voies $V_1$ à $V_6$ étant plus courte dans ce cas, on peut multiplier par deux la fréquence d'échantillonnage des signaux sismiques.

Chaque échantillon de signal est numérisé sous la forme d'un mot de 16 bits comportant (fig. 6) 11 bits de mantisse, un bit de signe et 4 bits $g_1$, $g_2$, $g_3$, $g_4$ pour le gain d'amplification. La configuration de ces 4 bits n'atteint jamais la valeur 15: elle est volontairement limitée à 11 ou 13.

Les mots numériques correspondant à un même cycle de multiplexage sont assemblés par blocs de 16. Le premier mot de chaque bloc (SYNC.) est utilisé pour la synchronisation de la transmission. Le second définit le numéro du canal auxiliaire (N° AUX) qui va être interrogé durant le cycle en cours. Les mots 3 à 8 correspondent aux échantillons prélevés sur les voies $V_1$ à $V_6$ successivement. Le 9ème mot correspond à l'échantillon de signal (AUX) lu sur le canal auxiliaire désigné ($N_1$ AUX). Le suivant est un mot de séparation standard constitué entièrement de zéros par exemple. Les six mots suivants 11 à 16 correspondent aux échantillons $V_7$ à $V_{12}$ prélevés sur les voies $V_7$ à $V_{12}$ de la seconde unité de multiplexage 28.

Dans le cas où le nombre de capteurs utilisé est au plus égal à six et où la durée d'échantillonnage des voies sismiques est réduite de moitié, les voies $V_7$ à $V_{12}$ sont remplacées par les voies $V_1$ à $V_6$. Un même bloc de 16 mots comporte donc deux échantillons de chacune des voies durant la même période d'échantillonnage $T_e$.

Pour déclencher un cycle d'acquisition de données sismiques, le système de commande et d'enregistrement en surface envoie un ordre par la ligne L' du câble multi-fonctions 2. A la réception de cet ordre (5A, fig. 8A) transmis par l'intermédiaire de l'ensemble d'interface 26 (fig. 3), l'ensemble de synchronisation 25 engendre une séquence prédéterminée:

il applique sur l'entrée Cc du commutateur 17 (fig. 3) un signal de commutation permettant la connexion de l'entrée $3_2$ à l'entrée du circuit de codage 18;

il transmet sur les ensembles de lignes $L_A$, $L_B$, des signaux de commande pour le multiplexeur principal 20 et le multiplexeur auxiliaire 21 qui sélectionnent une voie déterminée (à titre d'exemple, les lignes $I_0$, $I_1$, $I_2$, $I_3$ (fig. 4) sont mises au niveau logique bas de manière à sélectionner en premier lieu la voie d'entrée $X_0$); et

il applique sur l'entrée $e_2$ du commutateur, un signal de niveau logique bas, de manière que le circuit de codage engendre sous une forme codée une succession de zéros durant toute la durée de la première période de multiplexage $T_{e0}$ (fig. 8B, 8C). Cette succession de zéros définit la période d'initialisation.

A la fin de cette période initiale où les multiplexeurs 21 et 27 ont été commutés sur leurs premières voies respectives, l'ensemble de synchronisation 25 actionne de nouveau le commutateur 17, de manière que l'entrée $e_1$ soit de nouveau connectée au circuit de codage 18. Les blocs d'échantillons $B_1$, $B_2$ ... numérisés par le convertisseur analogique-numérique 16 au cours des ériodes d'échantillonnage suivantes $T_{e1}$, $T_{e2}$ ... (fig. 8B, 8C) sont alors transmis vers le système de commande en surface par la ligne L.

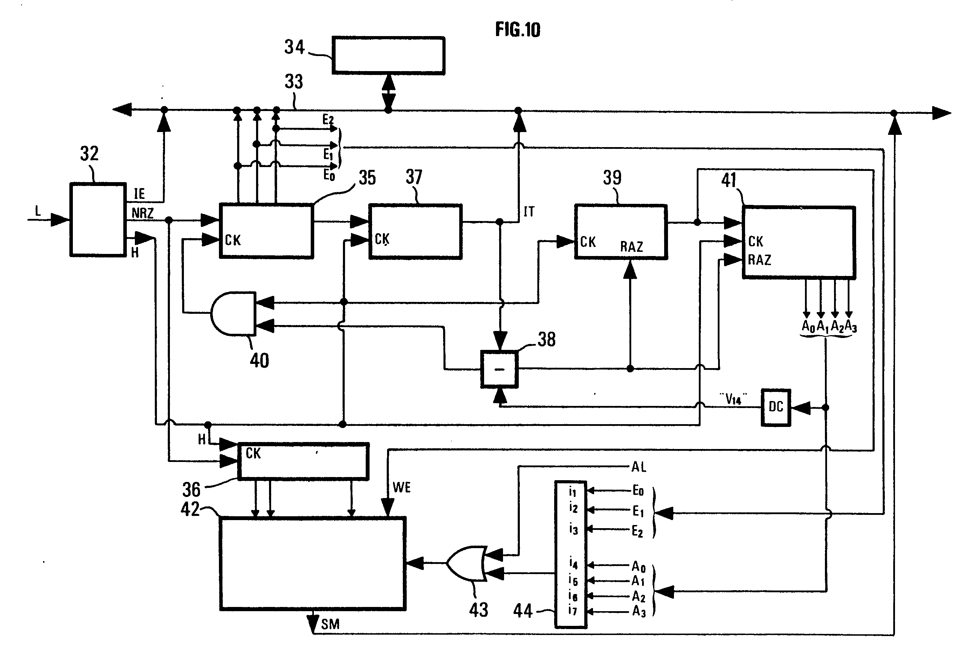

Le système de commande et d'enregistrement disposé en surface, à l'autre extrémité du câble de transmission 2 (fig. 1), comporte (fig. 9) une unité de commande 29, une unité de traitement de signaux 30, permettant la commande et la visualisation des différentes séquences fonctionnelles et une unité 31 d'enregistrement des données sismiques. L'unité de commande 29 comporte des moyens d'alimentation et de contrôle qui permettent à un opérateur la commande de l'ancrage des bras de la sonde principale, le déclenchement de ceux des sondes satellites et la visualisation des tensions électriques d'alimentation et des pressions hydrauliques. Une telle unité de commande est décrite dans la demande de brevet français EN. 87/04.677.

La ligne L est connectée directement, au travers de l'unité de commande 29, à l'unité de traitement de signaux 30. Les signaux remontant par cette ligne L, sont appliqués (fig. 10) à un module de réception et de décodage 32 qui en extrait deux signaux différents. Le premier correspond aux données transmises depuis la sonde de puits qui sont présentées suivant le code dit NRZ et le second, au signal d'horloge H qui a rythmé la transmission des signaux. Le module 32 délivre également un signal d'interruption IE s'il détecte une erreur de transmission dans les signaux reçus, et l'applique par l'intermédiaire d'un ensemble de conducteurs de liaison 33 que l'on désigne généralement par bus, à un microprocesseur 34 adapté à contrôler le processus d'enregistrement.

Les signaux codés suivant le code NRZ sont appliqués en série à l'entrée de deux registres à décalage 35, 36 à 16 bits. La sortie "débordement" du registre 35 est connectée à l'entrée de comptage d'un compteur à 4 bits 37. La sortie "retenue" de celui-ci est connectée au bus 33. Une sortie du basculeur est connectée d'une part à l'entrée de la porte ET 40 dont la sortie est connectée à l'entrée "horloge" CK du registre à décalage 35 et d'autre part aux entrées respectives de remise à zéro RAZ d'un second compteur 39 à quatre bits (compteur de bits) et d'un troisième compteur 41 (compteur de voies). Ainsi un signal de niveau logique 0 ferme la porte ET 40 et libère les compteurs 39 et 41.

La sortie "retenue" du compteur 39 est connectée à l'entrée de comptage du compteur de voies 41. Les 16 sorties en parallèle du registre à décalage 36 sont connectées aux entrées d'une mémoire-tamp on 42. Aux entrées d'adressage de la mémoire 42 et par l'intermédiaire d'une porte OU 43, sont connectées les sorties en parallèle d'un registre d'adresse 44. Les trois sorties de "poids faibles" du registre à décalage 35 ($E_0$, $E_1$, $E_2$) (correspondent aux trois bits les moins significatifs des mots binaires) sont connectées au multibus 33 et d'une par et respectivement à trois entrées $i_1$, $i_2$, $i_3$ du registre d'adresse 44. Quatre autres entrées de celui-ci ($i_4$, $i_5$, $i_6$, $i_7$) sont connectées respectivement aux sorties en parallèle $A_0$, $A_1$, $A_2$, $A_3$ du compteur de voies 41. Le signal d'horloge H issu du décodeur 32, est appliqué aux entrées "horloge" CK des trois compteurs 37, 39, 41, à celle du registre à décalage 36 et enfin à l'entrée de la porte ET 40. Les quatre sorties $A_0$, $A_1$, $A_2$, $A_3$ du même compteur de voies sont connectées aux entrées d'un décodeur DC adapté à la détection du nombre 14 exprimé en chiffres binaires, à émettre une impulsion qui est appliquée à une seconde entrée du basculeur 38. Les sorties SM de la mémoire-tampon 42 sont connectées au multibus 33.

A la seconde entrée de la porte OU 43, le microprocesseur 34 peut appliquer des mots définissant des adresses de la mémoire-tampon 42 et commander la lecture des données contenues à ces adresses sur le bus 33 et leur transfert via ce bus 33, vers l'unité d'enregistrement 31 (fig. 9). Enfin, l'ordre de validation d'écriture WE dans la mémoire-tampon 42 est prélevé à la sortie "retenue" du compteur de bits 39.

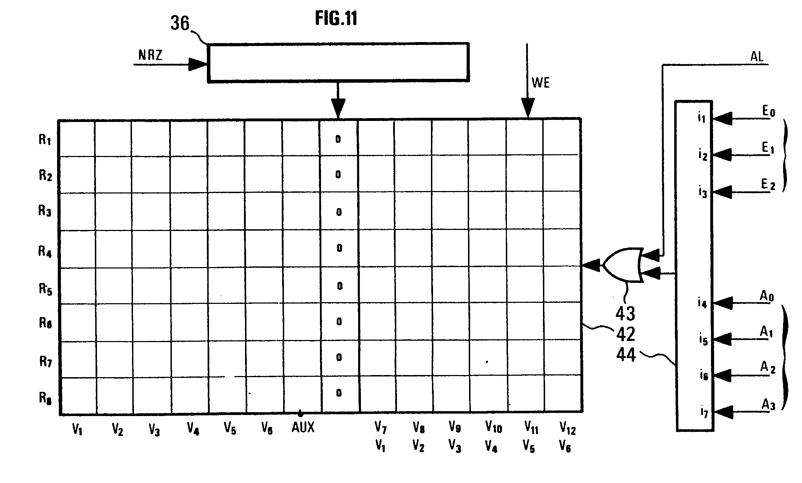

La mémoire-tampon 42 est organisée par exemple sous la forme d'un tableau à huit lignes et quatorze colonnes (fig. 11). Les bits aux sorties $E_0$, $E_1$, $E_2$ du registre à décalage 35 (fig. 10) et appliqués aux entrées $i_1$, $i_2$, $i_3$ du registre d'adresses 44, définissent le numéro de ligne de la mémoire.

Les bits $A_0$—$A_3$ lus aux sorties du compteur de voies 41 et appliqués aux entrées $i_4$—$i_7$ du même registre d'adresses 44, définissent le numéro de colonne.

Le contenu du registre à décalage 36 est transféré à l'adresse désignée par le numéro de ligne et le numéro de colonne, à la réception de chacun des ordres de validation WE successifs issus du compteur de bits 39.

Chaque ligne peut contenir 14 mots de 16 bits c'est-à-dire tous les échantillons lus au cours d'un même cycle d'acquisition $T_e$ (fig. 7). Les six premiers emplacements de chaque ligne sont affectés respectivement aux voies $V_1$ à $V_6$. Le septième est affecté à l'échantillon lu sur une voie auxiliaire. L'emplacement suivant est chargé avec le nombre zéro. Aux six emplacements qui suivent enfin sont rangés des échantillons correspondant respectivement aux voies $V_7$ à $V_{12}$.

La mémorisation des échantillons s'effectue de la manière suivante:

Le premier mot de chaque bloc (fig. 7) est signalé par un mot de synchronisation comportant seize "1" logiques suivi d'un seul "0" logique. Ce mot traverse les deux registres à décalage parallèles 35, 36 au rythme fixé par l'horloge H et ses seize "1" viennent s'accumuler dans le compteur à quatre bits 35. Lorsque celui-ci émet une impulsion de "retenue", le mot suivant, c'est-à-dire celui qui indique le numéro de la voie auxiliaire interrogée, est tout entier dans le registre à décalage 35. Cette impulsion de "retenue" a pour effet, en actionnant le basculeur 38, de fermer la porte ET 40 et ainsi de figer dans le registre à décalage 35 le numéro de la voie auxilaire et ainsi de libérer le compteur de bits 39 et le compteur de voies 41. Les trois bits de poids faible $E_0$, $E_1$, $E_2$ qui représentent ce numéro, vont définir le numéro de la rangée de la mémoire-tampon 42 où les échantillons du bloc reçu doivent tous être mémorisés. Cette impulsion de "retenue", constitue un signal d'interruption IT pour le microprocesseur qui interroge alors les 3 bits $E_0$, $E_1$, $E_2$ du registre 35 pour déterminer le numéro de la voie auxiliaire du bloc. Le basculeur 38, en même temps qu'il va fermer la porte 40, va libérer les compteurs 39 et 41. Chaque impulsion de "retenue" émise par le compteur 39 toutes les seize impulsions d'horloge H, marque la séparation entre les mots successifs de 16 bits du bloc. Elle est utilisée comme ordre de validation de la mémoire-tampon pour le chargement du mot présent alors dans le second registre à décalage 36. Comme cette impulsion de "retenue" fait progresser d'une unité le contenu du compteur de voie 41 et donc le numéro de la colonne du registre d'adress 44. Le mot présent dans le registre à décalage 36 est mémorise à l'emplacement suivant de la même rangée.

La détection par le décodeur DC du numéro 14 aux sorties en parallèle du compteur de voies 41 a pour effet de déclencher le basculeur 38 et donc par conséquent, de remettre à zéro le compteur 41 et ceci jusqu'à la détection d'un nouveau mot de synchronisation constitué de seize "1" logiques.

Le signal d'horloge a de nouveau accès au premier registre à décalage 35. La réception du bloc de mots suivant peut donc commencer.

Chaque rangée $R_1$ à $R_8$ contient 14 mots et son remplissage dure un intervalle de temps $T_e$ mais son contenu est différent selon que l'on a choisi l'option douze voies ou l'option deux fois six voies. Dans le premier cas, les mots d'une même rangée correspondent aux douze voies différentes. Dans le second cas les emplacements neuf à quatorze d'une même rangée sont affectés de nouveau aux voies $V_1$ à $V_6$.

L'ensemble de mémorisation fonctionne donc de la même manière dans les deux cas.

L'affectation réelle des emplacements n'est connu que du seul microprocesseur 34 qui reçoit des instructions en conséquence. Lorsqu'il vient lire une ou plusieurs rangées de la mémoire-tampon 42 durant les intervalles de temps entre deux opérations successives d'écriture, dans le but de transférer les mots qu'elles contiennent dans l'ensemble d'enregistrement 31 (fig. 9), il applique successivement les adresses des différents emplacements à lire sur la seconde entrée de la porte OU 43.

Dans le second cas où l'ensemble de réception ne comporte que six voies sismiques interrogés avec une période $T_e/2$, on programme le microprocesseur de manière que sur les enregistrements sismiques démultiplexés, les échantillons lus aux emplacements 1 et 9 de chaque rangée soient disposés côte à côte du fait qu'ils concernent la même voie sismique.

Dans les deux cas, le multiplexeur auxiliaire 21 (fig. 4) est interrogé avec la même périodicité $T_e$, chaque changement de la valeur du triplet $E_0$, $E_1$, $E_2$ lu dans le premier registre à décalage 45 indiquant bien le passage d'un bloc de 16 mots au suivant.

On ne sortirait pas du cadre de l'invention en utilisant un ensemble de multiplexage comportant plus de deux multiplexeurs en parallèle et en groupant les données numérisées en blocs de mots, les mots étant disposés dans chaque bloc à des emplacements tels que la désactivation d'un ou plusieurs multiplexeurs permettre avec une période d'interrogation constante $T_e$, d'augmenter la fréquence d'interrogation des voies effectivement connectées. La mémoire-tampon est alors agencée pour ranger suivant une même ligne du tableau (fig. 11) tous les échantillons de signaux collectés durant la même période d'interrogation.

**Revendications**

1. Système pour l'acquisition et l'enregistrement de signaux fournis par un ensemble de capteurs (G) disposés dans une ou plusieurs sondes qui sont descendues dans un puits à l'extrémité d'un câble multi-fonctions (2) pourvu de lignes de transmission de signaux, comportant un ensemble d'acquisition disposé dans une sonde et pourvu de moyens d'amplification de signaux, des moyens (16) de conversion analogiques-numériques, des moyens (18, 19) d'adaptation de signaux avant leur application à au moins une ligne du câble multi-fonctions et de moyens de synchronisation (25), et un ensemble de commande et d'enregistrement (29, 31) disposé en surface et connecté aux lignes de transmission de signaux, caractérisé en ce qu'il comporte un ensemble (20) de multiplexage de signaux constitué d'au moins deux unités de multiplexage (27, 28) en parallèle possédant chacune un même nombre de voies d'entrée, les sorties des deux unités de multiplexage étant interconnectées à l'entrée de l'ensemble d'acquisition et les voies d'entrée de l'une au moins de ces deux unités recevant des signaux provenant desdits capteurs (G), des moyens de commande pour valider une seule unité de multiplexage à la fois de manière à sélectionner les voies d'entrée de celle-ci et des moyens pour commander la commutation des voies d'entrée de l'ensemble de multiplexage à une fréquence indépendante du nombre d'unités de multiplexage utilisées, de manière à faire varier la fréquence de lecture de chacune des voies d'entrées connectée à un capteur, en fonction du nombre d'unités de multiplexage utilisées.

2. Système selon la revendication 1, caractérisé en ce que l'ensemble de multiplexage (20) comporte deux multiplexeurs (27, 28) connectés aux moyens de synchronisation par les lignes d'adressage ($I_0$—$I_2$) et une ligne de validation ($I_3$), celle-ci étant connectée directement à l'entrée de validation du premier multiplexeur (27) et par l'intermédiaire d'un élément d'inversion logique (9), à celle du second multiplexeur (28).

3. Système selon la revendication 1, caractérisé en ce que les moyens d'adaptation des signaux sont adaptés à grouper les données numérisées à transmettre, par blocs de mots numériques précédés d'un mot de synchronisation, le nombre de mots de chaque bloc dépendant du nombre d'unités de multiplexage et du nombre de voies d'entrée de chacune d'elles, l'affectation de chaque emplacement dans lesdits blocs dépendant du nombre de voies d'entrée effectivement connectées chacune à un desdits capteurs.

4. Système selon la revendication 1, caractérisé en ce que l'ensemble de multiplexage comporte un multiplexeur auxiliaire (21) connecté à une voie d'entrée de l'une des unités (27) de multiplexage, la voie d'entrée correspondante des autres unités de multiplexage n'étant pas connectée, et en ce que les moyens d'adaptation des signaux sont adaptés à grouper les données numérisées à transmettre, par blocs de mots dont le nombre est égal au nombre total de voies d'entrée de l'ensemble de multiplexage.

5. Système selon les revendications 1 et 3, caractérisé en ce que l'ensemble de commande et d'enregistrement comporte une mémoire-tampon (2) et des moyens pour grouper ensemble dans ladite mémoire-tampon tous les mots numériques appartenant à un même bloc de mots numériques transmis.

6. Système selon les revendications 1 et 4, caractérisé en ce que l'ensemble de commande et d'enregistrement comporte une mémoire-tampon (42) associée à un registre d'adresse (44) et des moyens pour grouper ensemble dans la mémoire-tampon tous les mots numériques appartenant à un même bloc, lesdits moyens comportant un premier compteur (37) pour la détection de chaque mot de synchronisation, un premier et un second registre à décalage (35, 26) recevant en parallèle les signaux numérisés, des moyens pour bloquer le premier registre (35), à la détection dans chaque bloc de mots de celui qui représente le numéro d'ordre de la voie du multiplexeur auxiliaire (21), des moyens de commande du registre d'adresse (44) pour regrouper ensemble dans la mémoire-tampon, tous les mots numérique appartenant à un même bloc correspondant à ce même numéro d'ordre et des compteurs (39, 41), pour commander la répartition des différents mots d'un même bloc aux différents emplacements du même bloc d'adresse.

7. Système selon la revendication 6, caractérisé en ce qu'il comporte un compteur de voies (41), les sorties en parallèle dudit compteur de voies et des sorties du premier registre à décalage (35) étant connectées aux entrées d'adressage du registre d'adresse (44).

8. Système selon la revendication 6, caractérisé en ce que l'ensemble de commande et d'enregistrement comporte également des moyens d'enregistrement (31), un calculateur programmable (34) adapté à gérer les transferts du contenu des blocs d'adresse de la mémoire-tampon vers les moyens d'enregistrement, à des emplacements dépendant du nombre d'unités de multiplexage effectivement utilisées.

9. Système selon la revendication 1, caractérisé en ce qu'il comporte un commutateur (17) pour connecter sélectivement à l'entrée des moyens d'adaptation (18, 19), les sorties des moyens de conversion analogique-numérique, ou bien une sortie des moyens de synchronisation, l'ensemble de commande et d'enregistrement étant adapté à commander aux moyens de synchronisation, l'application auxdits moyens d'adaptation par l'intermédiaire du commutateur (17), d'un mot numérique prédéterminé pendant un intervalle de temps d'initialisation, au début de chaque cycle de transmission.

**Patentansprüche**

1. System zur Erfassung und Aufzeichnung von Signalen, die durch eine Anordnung von Empfängern (G) geliefert werden, die in einer oder mehreren Sonden angeordnet sind, welche in ein Bohrloch am Ende eines Multifunktionskabels (2) herabgelassen werden, das mit Leitungen zur Übertragung von Signalen versehen ist, mit einer Erfassungsanordnung, die in einer Sonde angeordnet und mit Signalverstärkereinrichtungen versehen ist, Mitteln (16) zur Analog-Digitalumwandlung, Mitteln (18, 19) zur Anpassung von Signalen, bevor sie an wenigstens eine Leitung des Mehrfunktionskabels gelegt werden und Synchronisationsmitteln (25) und einer Steuer- und Aufzeichnungsanordnung (29, 31), die an der Oberfläche angeordnet und mit den Signalübertragungsleitungen verbunden ist, dadurch gekennzeichnet, daß es eine Signalmultiplexanordnung (20) umfaßt, die aus wenigstens zwei Multiplexeinheiten (27, 28) parallel besteht, die je eine gleiche Anzahl von Eingangswegen haben, wobei die Ausgänge der beiden Multiplexeinheiten mit dem Eingang der Erfassungsanordnung verbunden sind und die Eingangswege wenigstens einer dieser beiden Einheiten aus diesen Empfängern (G) stammende Signale empfangen, Steuermittel zum gleichzeitigen Gültigerklären einer einzigen Multiplexeinheit auf einmal, derart, daß die Eingangswege hiervon ausgewählt werden und Mitteln zur Steuerung der Umschaltung der Eingangswege der Multiplexanordnung bei einer Frequenz unabhängig von der Anzahl der verwendeten Multiplexeinheiten, derart, daß ein Variieren der Lesefrequenz jeder der mit einem Empfänger verbundenen Eingangswege als Funktion der Anzahl der verwendeten Multiplexeinheiten veranlaßt wird.

2. System nach Anspruch 1, dadurch gekennzeichnet, daß die Multiplexanordnung (20) zwei Multiplexer (27, 28) umfaßt, die mittels Synchronisationseinrichtungen über Adressenleitungen ($L_0$—$L_2$) und eine Gültigmachungsleitung ($L_3$) verbunden sind, wobei diese direkt mit dem Gültigmachungseingang des ersten Multiplexers (27) und vermittels eines logischen Inverterelements (9) mit dem des zweiten Multiplexers (28) verbunden ist.

3. System nach Anspruch 1, dadurch gekenzeichnet, daß die Signalanpassungsmittel so ausgelegt sind, daß sie die digitalisierten zu übertragenden Daten in Blöcke von Digitalwörtern, denen ein Synchronisationswort vorhergeht, gruppieren, wobei die Anzahl der Wörter jedes Blocks von der Anzahl von Multiplexeinheiten und der Anzahl der Eingangswege jedes hiervon abhängen, wobei die Zuweisung jedes Platzes in diesen Blöcken abhängt von der Anzahl der Eingangswege, die effektiv jeweils mit einem der Empfänger verbunden sind.

4. System nach Anspruch 1, dadurch gekennzeichnet, daß die Multiplexanordnung einen Hilfsmultiplexer (21) umfaßt, der mit einem Eingangsweg einer der Multiplexeinheiten (27) verbunden ist, wobei der entsprechende Eingangsweg der anderen Multiplexeinheiten nicht verbunden ist und daß die Signalanpassungsmittel so ausgelegt sind, daß sie die zu übertragenden digitalisierten Daten in Wortblöcken gruppieren, deren Anzahl gleich der Gesamtanzahl der Eingangswege der Multiplexanordnung ist.

5. System nach Anspruch 1 und 3, dadurch gekennzeichnet, daß die Steuer- und Aufzeichnungsanordnung einen Pufferspeicher (2) und Mittel umfaßt, um gemeinsam in diesen Pufferspeicher die digitalen Worte zu gruppieren, die zu ein und dem gleichen Block übertragener digitaler Worte gehören.

6. System nach Anspruch 1 und 4, dadurch gekennzeichnet, daß die Steuer- und Aufzeichnungsanordnung einen Pufferspeicher (42), der einem Adressenregister (44) zugeordnet ist, sowie Mittel umfaßt, um zusammen im Pufferspeicher sämtliche digitalen zu ein und dem gleichen Block gehörenden Wörter zu gruppieren, wobei diese Mittel einen ersten Zähler (37) zur Ermittlung jedes Synchronisationswortes und ein erstes und zweites Schieberegister (35, 26) umfassen, welche parallel die digitalisierten Signale empfangen, Mittel zum Sperren des ersten Registers (35) bei der Detektion in jedem Block von Wörtern hiervon, die die Ordnungszahl des Hilfsmultiplexerwegs (21) darstellt, Mittel zum Steuern des Adressenregisters (44) zur gemeinsamen Regruppierung im Pufferspeicher sämtlicher zu ein und dem gleichen Block gehörender digitaler Wörter, entsprechend ein und der gleichen Ordnungszahl und Zähler (39, 41) zum Steuern der Verteilung der verschiedenen Worte ein und des gleichen Blocks auf die verschiedenen Orte des gleichen Adressenblocks.

7. System nach Anspruch 6, dadurch gekennzeichnet, daß es einen Wegezähler (41) umfaßt, wobei die Parallelausgänge dieses Wegezählers und Ausgänge des ersten Schieberegisters (35) mit den Adresseneingängen des Adressenregisters (44) verbunden sind.

8. System nach Anspruch 6, dadurch gekennzeichnet, daß die Steuer- und Aufzeichnungsanordnung ebenfalls Aufzeichnungsmittel (31) und einen programmierbaren Rechner (34) umfaßt, der so ausgelegt ist, daß er die Übertragungen des Inhalts der Adressenblöcke des Pufferspeichers zu den Aufzeichnungsmitteln an Orte leitet, die von der Anzahl der effektiv verwendeten Multiplexeinheiten abhängen.

9. System nach Anspruch 1, dadurch gekennzeichnet, daß es einen Umschalter (17) umfaßt, um selektiv an den Eingang der Anpaßmittel (18, 19) die Ausgänge der Analog-Digitalumwandlereineinrichtungen oder auch einen Ausgang der Synchronisationsmittel zu verbinden, wobei die Steuer- und Aufzeichnungsanordnung so ausgelegt ist, um auf die Synchronisationsmittel die Zuführung eines vorbestimmten digitalen Wortes zu den Anpaßmitteln vermittels des Umschalters (17) während eines Initialisierungszeitintervalls bei Beginn jedes Übertragungszyklus zu steuern.

**Claims**

1. A system for the acquisition and recording of signals provided by an assembly of sensors (G) disposed in one or more probes which are lowered into a well at the end of a multifunction cable (2) provided with signal transmission lines, comprising an acquisition assembly disposed in a probe and provided with signal amplification means, means (16) for analog-digital conversion, means (18, 19) for matching signals before they are applied to at least one line of the multifunction cable and synchronisation means (25), and a control and recording assembly (29, 31) disposed at the surface and connected to the signal transmission lines, characterised in that it comprises a signal multiplexing assembly (20) formed by at least two multiplexing units (27, 28) in parallel, each having the same number of input channels, the outputs of the two multiplexing units being connected to the input of the acquisition assembly and the input channels of at least one of these two units receiving signals originating from the said sensors (G), means of control for enabling a single multiplexing unit at the same time so as to select the input channels on it and means for controlling the switching of the input channels on the multiplexing assembly at a frequency independent of the number of multiplexing units used, so as to vary the frequency of reading of each of the input channels connected to a sensor, depending on the number of multiplexing units used.

2. A system according to Claim 1, characterised in that the multiplexing assembly (20) comprises 2 multiplexers (27, 28) connected to the synchronisation means by addressing lines ($l_0$—$l_2$) and an enabling line ($l_3$), the latter being connected directly to the enabling input of the first multiplexer (27) and through a logic inversion element (9) to that of the second multiplexer (28).

3. A system according to Claim 1, characterised in that the means of matching the signals are suitable for grouping the digitised data to be transmitted, by blocks of numeric words preceded by a synchronisation word, the number of words in each block depending on the number of multiplexing units and the number of input channels on each of them, the allocation of each position in the said blocks depending on the number of input channels each actually connected to one of the said sensors.

4. A system according to Claim 1, characterised in that the multiplexing assembly comprises an auxiliary multiplexer (21) connected to one input channel on one of the multiplexing units (27), the corresponding input channel on the other multiplexing units not being connected, and in that the means for matching the signals are suitable for grouping the digitised data to be transmitted, by blocks of words whose number is equal to the total number of input channels on the multiplexing assembly.

5. A system according to Claims 1 to 3, characterised in that the control and recording assembly comprises a buffer memory (2) and means for grouping together in the said buffer memory all the numeric words belonging to the same block of numeric words transmitted.

6. A system according to Claims 1 and 4, characterised in that the control and recording assembly comprises a buffer memory (42) associated with an address register (44) and means for grouping together in the buffer memory all the numeric words belonging to the same block, the said means comprising a first counter (37) for detecting each synchronisation word, a first and second shift register (35, 26) receiving in parallel the digitised signals, means for inhibiting the first register (35), when in each block of words the one is detected which represents the serial number of the channel on the auxiliary multiplexer (21), means of controlling the address register (44) for grouping together in the buffer memory all the numeric words belonging to the same block corresponding to this same serial number, and counters (39, 41) for controlling the allocation of the different words in the same block to the different positions in the same address block.

7. A system according to Claim 6, characterised in that it comprises a channel counter (41), the parallel outputs of the said channel counter and outputs from the first shift register (35) being connected to the addressing inputs of the address register (44).

8. A system according to Claim 6, characterised in that the control and recording assembly also comprises recording means (31), a programmable calculator (34) suitable for controlling the transfers of the contents of the address blocks from the buffer memory to the recording means, in positions depending on the number of multiplexing units actually used.

9. A system according to Claim 1, characterised in that it comprises a switch (17) for selectively connecting to the input of the matching means (18, 19), the outputs from the analog-digital conversion means, or else an output from the synchronisation means, the control and recording assembly being suitable for ordering the synchronisation means to apply a predetermined numeric word to the said matching means through a switch (17) for an interval of initialisation time at the start of each transmission cycle.

**FIG.1**

**FIG.2**

FIG.3

FIG.5

FIG.9

EP 0 294 284 B1

FIG.4

EP 0 294 284 B1

3

**FIG.6**

$g_3$ $g_2$ $g_1$ $g_0$ | S | $2^{10}$ // $2^2$ $2^1$ $2^0$

**FIG.7**

| SYNC | N'AUX | V1 | V2 | | V6 | AUX | 0----0 | V7 | V8 | V12 | SYNC | // $\rightarrow$ t

1   2   3   4   8   9   10   11   12   16

Te

SA

**FIG.8A**

**FIG.8B**

0------0 | B1 | B2 | B3 | | | // $\rightarrow$ t

**FIG.8C**

// $\rightarrow$ t

Te0 | Te1 | Te2 | Te3

4

FIG.10

FIG.11